# EUROPÄISCHE PATENTSCHRIFT

(11) **EP 0 461 459 B1**
(45) Veröffentlichungstag und Bekanntmachung des Hinweises auf die Patenterteilung: **13.07.1994**
(21) Anmeldenummer: 91108647.8
(22) Anmeldetag: 28.05.1991
(51) Int. Cl.: G01L 9/00

(54) **Druckmessumformer mit einem rotationssymmetrischen Drucksensor aus Keramik**
Pressure transducer with ceramic pressure sensor of rotational symmetry
Transducteur de mesure de pression avec palpeur céramique, de pression à symétrie de révolution

(30) Priorität: 11.06.1990 DE 4018638
(43) Veröffentlichungstag der Anmeldung: 18.12.1991
(73) Patentinhaber: Hartmann & Braun Aktiengesellschaft, 60484 Frankfurt am Main (DE)
(72) Erfinder: Obermeier, Horst, W-4971 Hüllhorst (DE); Altiok, Emrullah, W-4950 Minden (DE)
(74) Vertreter: Meissner, Peter E., Dipl.-Ing.

(56) Entgegenhaltungen:
- EP-A- 0 333 091
- DE-A- 3 009 811
- DE-A- 3 733 766
- DE-U- 8 914 010
- US-A- 4 840 067

## Beschreibung

Die Erfindung bezieht sich auf einen Druckmeßumformer mit einem rotationssymmetrischen Drucksensor aus Keramik gemäß dem Oberbegriff des Anspruchs 1.

Ein derartiger Druckmeßumformer ist aus dem deutschen Gebrauchsmuster 89 14 010 bekannt. Ein rotationssymmetrischer Drucksensor aus Keramik ist in einem Gehäuse gehalten, das aus einem rotationssymmetrischen Grundteil und einem über die Seitenwand des Grundteils greifenden Topf gebildet ist. Zwischen der als Membran ausgebildeten Stirnfläche des Drucksensors und dem Grundteil ist ein Dichtungsring im Randbereich des Drucksensors angeordnet. Dieser Dichtungsring soll verhindern, daß das Prozeßmedium, das sich in dem Raum zwischen der Stirnfläche des Drucksensors und dem Grundteil befindet, weiter in das Gehäuse eindringt. Bei einer zu grobkörnigen Struktur der Oberfläche des Drucksensors ergeben sich Dichtungsprobleme.

Der Erfindung liegt die Aufgabe zugrunde, einen Meßumformer der eingangs genannten Art anzugeben, der es erlaubt, die Dichtwirkung zwischen der als Membran ausgebildeten Stirnfläche des aus Keramik hergestellten Drucksensors und dem Dichtungsring zu verbessern.

Diese Aufgabe wird erfindungsgemäß durch das im Kennzeichen des Anspruchs 1 angegebene Merkmal gelöst. Vorteilhafte Ausgestaltungen des Meßumformers nach Anspruch 1 sind in den Ansprüchen 2 bis 6 gekennzeichnet.

Die Erfindung wird im folgenden anhand eines in den Zeichnungen dargestellten Ausführungsbeispiels näher erläutert. Es zeigen
- Figur 1: die Seitenansicht eines Druckmeßumformers gemäß der Erfindung sowie einen Teilschnitt durch diesen Druckmeßumformer,
- Figur 2: ein Detail des in der Figur 1 dargestellten Teilschnitts und
- Figur 3: eine Draufsicht auf die als Membran ausgebildete Stirnfläche des Drucksensors.

Gleiche Bauteile sind mit den gleichen Bezugszeichen versehen.

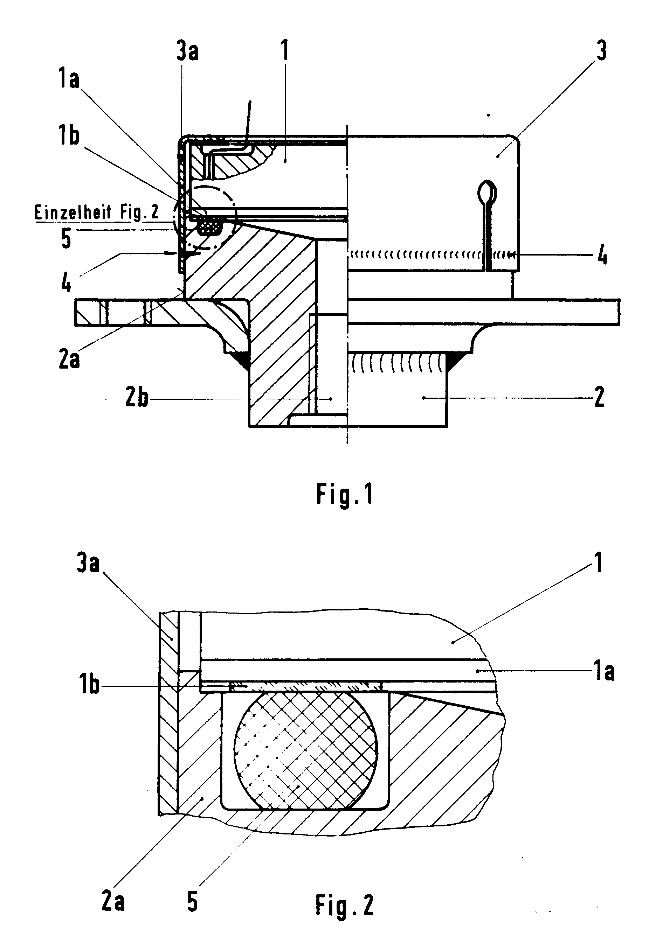

Die linke Seite der Figur 1 zeigt einen Teilschnitt durch einen Druckmeßumformer gemäß der Erfindung, während die rechte Seite der Figur 1 eine Seitenansicht des Druckmeßumformers zeigt. Die Figur 2 zeigt ein Detail des in der Figur 1 dargestellten Teilschnitts in vergrößertem Maßstab. Der Druckmeßumformer weist einen rotationssymmetrischen Drucksensor 1 auf, der aus Keramik hergestellt ist. Die eine Stirnfläche des Drucksensors 1 ist als Membran 1a ausgebildet. Bei dem Drucksensor 1 kann es sich sowohl um einen kapazitiven Drucksensor als auch um einen resistiven Drucksensor, bei dem die druckabhängige Auslenkung der Membran von Dehnungsmeßstreifen erfaßt wird, handeln. Das Gehäuse besteht aus einem rotationssymmetrischen Grundteil 2, das z. B. aus VA-Stahl hergestellt ist, und aus einem Topf 3, der z. B. aus einer Nickel-Eisen-Legierung hergestellt ist. Die Seitenwand 3a des Topfes 3 greift über die Seitenwand 2a des Grundteils 2. Die Seitenwand 3a des Topfes 3 ist mit der Seitenwand 2a des Grundteils 2 durch eine Elektronenstrahl-Schweißnaht 4 verbunden. Das Grundteil 2 dient als Prozeßanschluß. Hierzu weist es eine zentrale Bohrung 2b auf, die mit einem Gewinde für den Anschluß einer in den Figuren nicht dargestellten Druckzuführungsleitung versehen ist. Die Membran 1a ist in ihrem Randbereich mit einer ringförmigen Glasschicht 1b versehen. Die Dicke der Glasschicht 1b liegt in der Größenordnung von 10 »m. In einem ausgeführten Beispiel beträgt die Dicke der Glasschicht 12 »m. Die Glasschicht 1b ist im Siebdruckverfahren aufgebracht. Durch einen Läpp-Prozeß kann - falls erforderlich - eine Verbesserung der Oberflächenqualität erzielt werden. Zwischen der Glasschicht 1b und dem Grundteil 2 ist ein Dichtungsring 5 angeordnet. Der Dichtungsring 5 verhindert, daß Prozeßmedium aus dem Raum zwischen der Membran 1a und dem Grundteil 2 in den Raum zwischen dem Drucksensor 1 und dem Topf 3 eindringt. Durch die auf die als Membran 1a ausgebildete Stirnfläche des Drucksensors 1 aufgebrachte Glasschicht 1b verringert sich die Oberflächenrauhigkeit der als Membran 1a ausgebildeten Stirnfläche des Drucksensors 1. Es ergibt sich eine verbesserte Dichtwirkung zwischen dem Dichtungsring 5 und der als Membran 1a ausgebildeten Stirnfläche des Drucksensors 1. Im einfachsten Fall ist der Dichtungsring 5 ein aus Buna N hergestellter O-Ring.

Eine noch bessere Dichtwirkung läßt sich erreichen, wenn als Dichtungsring 5 ein aus einem, z.B. unter der Bezeichnung VITON bekannten, Fluorelastomer hergestellter Ring verwendet wird. Nachdem der Topf 3 mit dem Grundteil 2 verschweißt worden ist, folgt eine Wärmebehandlung des Drucksensors 1 bei mindestens 160 °C. Durch die Wärmebehandlung vulkanisiert das Fluorelastomer aus und verbindet sich dabei sowohl mit der Oberfläche der Glasschicht 1b als auch mit der Oberfläche des aus VA-Stahl hergestellten Grundteils 2. Erst die glatte Oberfläche der auf die Membran 1a aufgebrachten Glasschicht 1b ermöglicht eine dichte Verbindung zwischen dem Dichtungsring 5 und dem Drucksensor 1.

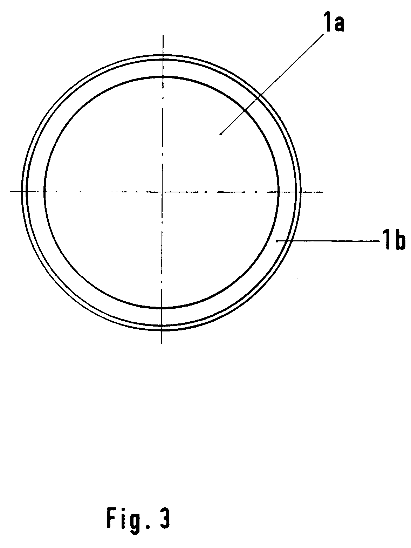

Die Figur 3 zeigt eine Draufsicht auf die als Membran 1a ausgebildete Stirnfläche des Drucksensors 1. Die als Membran 1a ausgebildete Stirnfläche des Drucksensors 1 ist in ihrem Randbereich durch die Glasschicht 1b verdeckt.

## Patentansprüche

1. Druckmeßumformer mit einem rotationssymmetrischen Drucksensor (1) aus Keramik, dessen eine Stirnfläche als Membran (1a) ausgebildet ist, mit einem den Drucksensor umschließenden Gehäuse, das aus einem als Prozeßanschluß dienenden rotationssymmetrischen Grundteil (2) und aus einem über die Seitenwand des Grundteils greifenden Topf (3) besteht, und mit einem Dichtungsring (5), der zwischen der als Membran (1a) ausgebildeten Stirnfläche des Drucksensors und dem Grundteil (2) des Gehäuses im Randbereich des Drucksensors angeordnet ist, dadurch gekennzeichnet,
daß der Randbereich der als Membran (1a) ausgebildeten Stirnfläche des Drucksensors (1) mit einer Glasschicht (1b) versehen ist.

2. Druckmeßumformer nach Anspruch 1, dadurch gekennzeichnet, daß die Dicke der Glasschicht (1b) in der Größenordnung von 10 »m liegt.

3. Druckmeßumformer nach Anspruch 1 oder Anspruch 2, dadurch gekennzeichnet, daß die Glasschicht (1b) im Siebdruckverfahren auf den Randbereich der als Membran (1a) ausgebildeten Stirnfläche des Drucksensors (1) aufgebracht ist.

4. Druckmeßumformer nach einem der vorhergehenden Ansprüche, dadurch gekennzeichnet, daß die Oberfläche der Glasschicht (1b) geläppt ist.

5. Druckmeßumformer nach einem der vorhergehenden Ansprüche, dadurch gekennzeichnet, daß der Dichtungsring (5) aus einem Fluorelastomer besteht.

6. Druckmeßumformer nach Anspruch 5, dadurch gekennzeichnet, daß nach dem Verschweißen des Topfes (3) mit dem Grundteil (2) eine Wärmebehandlung des Drucksensors (1) bei mindestens 160 °C erfolgt.

## Claims

1. A pressure measuring transducer having a rotationally symmetrical pressure sensor (1) made of ceramic, one end face of which is designed as a membrane (1a), with a housing which surrounds the pressure sensor and which consists of a rotationally symmetrical base part (2) which serves as a process connection and of a pot (3) engaging over the side wall of the base part, and with a sealing ring (5) which is located between the end face of the pressure sensor which is designed as a membrane (1a) and the base part (2) of the housing in the edge region of the pressure sensor, characterised in that the edge region of the end face of the pressure sensor (1) which is designed as a membrane (1a) is provided with a glass layer (1b).

2. A pressure measuring transducer according to Claim 1, characterised in that the thickness of the glass layer (1b) is of the order of 10 »m.

3. A pressure measuring transducer according to Claim 1 or Claim 2, characterised in that the glass layer (1b) is applied to the edge region of the end face of the pressure sensor (1) which is designed as a membrane (1a) in a screen printing process.

4. A pressure measuring transducer according to one of the preceding Claims, characterised in that the surface of the glass layer (1b) is lapped.

5. A pressure measuring transducer according to one of the preceding Claims, characterised in that the sealing ring (5) consists of a fluoroelastomer.

6. A pressure measuring transducer according to Claim 5, characterised in that once the pot (3) has been welded to the base part (2) heat treatment of the pressure sensor (1) at at least 160°C takes place.

## Revendications

1. Transducteur de mesure de pression comportant un capteur de pression (1), à symétrie de révolution, en céramique, dont une face frontale est réalisée en tant que membrane (1a), et un boîtier enfermant le capteur de pression, qui est constitué d'une partie de base (2) à symétrie de révolution servant de raccord de procédé et d'un capot (3) s'engageant sur la paroi latérale de la partie de base, ainsi qu'une bague d'étanchéité (5), qui est agencée entre la face frontale, réalisée en tant que membrane (1a), du capteur de pression et la partie de base (2) du boîtier dans la zone marginale du capteur de pression,
caractérisé en ce que la zone marginale de la face frontale, réalisée en tant que membrane (1a), du capteur de pression (1) est munie d'une couche de verre (1b).

2. Transducteur de mesure de pression selon la revendication 1,
caractérisé en ce que l'épaisseur de la couche de verre (1b) est de l'ordre de grandeur de 10 »m.

3. Transducteur de mesure de pression selon la revendication 1 ou la revendication 2,
caractérisé en ce que la couche de verre (1b) est appliquée par un procédé de sérigraphie sur la zone marginale de la face frontale, réalisée en tant que membrane (1a), du capteur de pression (1).

4. Transducteur de mesure de pression selon une des revendications précédentes,
caractérisé en ce que la surface de la couche de verre (1b) est rodée.

5. Transducteur de mesure de pression selon une des revendications précédentes,
caractérisé en ce que la bague d'étanchéité (5) est réalisée en un élastomère fluoré.

6. Transducteur de mesure de pression selon la revendication 5,
caractérisé en ce que, après le soudage du capot (3) à la partie de base (2), un traitement thermique du capteur de pression (1) à au moins 160°C est effectué.
